# EUROPEAN PATENT SPECIFICATION

(11) **EP 3 614 040 B1**
(45) Date of publication and mention of the grant of the patent: **23.06.2021**
(21) Application number: 19193419.9
(22) Date of filing: 23.08.2019
(51) Int. Cl.: F21S 8/04, F21V 17/10, F21V 23/00, F21V 29/83, H02G 3/32, F21V 17/00, F21V 19/00, F21V 23/04, F21Y 105/10, F21Y 115/10

(54) **A LIGHT SOURCE PLATE AND A CEILING LIGHT**
LICHTQUELLENPLATTE UND DECKENLICHT
PLAQUE DE SOURCE LUMINEUSE ET LUMIÈRE DE PLAFOND

(30) Priority: 23.08.2018 CN 201821364622 U; 23.08.2018 CN 201821367358 U; 23.08.2018 CN 201821368679 U
(43) Date of publication of application: 26.02.2020
(73) Proprietor: Lumier AS, 1481 Hagan (NO)
(72) Inventor: CHAO, Wen-Hsin, 508 ChangHua County (TW)
(74) Representative: Protector IP AS

(56) References cited:
- EP-A1- 2 848 859
- DE-U1-202012 001 432
- FR-A1- 2 785 662
- US-A1- 2015 029 715

## Description

### TECHNICAL FIELD

The present invention relates to the technical field of ceiling lights.

### Background Art

The ceiling light is a commonly used light. The top of the light is relatively flat and is attached onto the bottom surface of the ceiling. Therefore, the light is called a ceiling light. Since the ceiling light has the advantage of being aesthetically beautiful, it is widely used at various sites such as the home, offices, entertainment venues and the like. During the installation process of the ceiling light, the installer may need to use a ladder, and the installation operations including fixing a top cover, connecting wires and installing a light source, a light source plate and a light cover are completed on the ladder. Since the installation operations are performed at a high place and limited by the ceiling at the upper end, a certain difficulty exists.

Especially for the operation of installing the light source plate during the installation process of the ceiling light, existing light source plates are typically detachably mounted on a fixed top cover, and a light source is fixedly mounted at a lower end of the light source plate. It is found that the light source plate is generally detachably mounted on the fixed top cover in the following manner: the light source plate is provided with a pivot shaft at one end thereof and with a snap-fit member at the other end. Correspondingly, the fixed top cover is provided with a pivot seat at one end thereof and with a snap-fit seat at the other end. By mounting the pivot shaft in the pivot seat, the light source plate is capable of rotating around the fixed top cover, and through the cooperation of the snap-fit member and the snap-fit seat, the light source plate can be fixed to the fixed top cover.

However, it is found that the above structure has the following defects: firstly, during installation, a tool is required for forcedly pushing the pivot shaft into the pivot seat, thus leading to inconvenient installation. Meanwhile, the pivot shaft or the pivot seat may be easily damaged. Secondly, since the light source is fixed on the light source plate, the light source may need to be replaced due to damage in use caused by the influence of the service life of the light source or the environment of use. When replacing the light source, the light source plate with the light source fixed thereon has to be removed from the fixed top cover, and then the light source is replaced by a new one. In this case, after the snap-fit member is activated on the snap-fit seat, a tool is further required for forcing the pivot shaft from the pivot seat so that the light source plate with the light source fixed thereon can be successfully removed, thereby resulting in the defect of inconvenient detachment. Moreover, the pivot shaft or the pivot seat may also be easily damaged.

Publication US2015029715A1 discloses a ceiling light with a light source plate that is detachably mounted to a fixed top cover. An LED carrier plate is attached to the light source plate.

DE202012001432U1 presents a light source plate structure of a street light. It has a fixed top cover to which a light source plate is detachably fixed. The light source plate attaches to the top cover with a pivoting arrangement, enabling it to depend from the top cover in a pivoting manner.

Furthermore, publication FR2785662A1 also discloses a lamp with a light source carrier plate that is pivotably connected to ta support plate.

EP2848859A1 shows a ceiling light having a support plate and a light-carrying plate that connects to the support plate with a hinged connection.

In view of the above, the designer has developed and designed the invention through deep conception and active research, improvement and trial, considering the many defects and inconveniences caused by imperfect design of the above-mentioned light source plate structure of a ceiling light.

An object of the present invention may be to provide a light source plate structure of a ceiling light, which is convenient to install and disassemble.

### Summary of invention

According to one aspect of the present invention, there is provided a light source plate structure of a ceiling light, comprising a fixed top cover and a light source plate. The light source plate is detachably mounted at a lower end of the fixed top cover. The light source plate structure comprises a pivot shaft disposed at one end of the light source plate and a pivot seat arranged at one end of the fixed top cover. The light source plate is configured to be pivotally connected to the fixed top cover when the pivot shaft is mounted to the pivot seat. The pivot seat is provided with a sinking platform and pivot holes. The pivot holes are disposed on both sides of the sinking platform. The light source plate is provided with a pivot shaft mounting member that is mounted to the sinking platform. The pivot shaft is mounted at both ends of the pivot shaft mounting member and inserted in the pivot holes. The pivot shaft at at least one end of the pivot shaft mounting member is movably mounted on the pivot shaft mounting member.

According to the invention, the pivot shaft movably mounted on the pivot shaft mounting member is a movable shaft and the pivot shaft mounting member comprises a chamber. Moreover, the movable shaft is movably inserted into the chamber, and the pivot shaft mounting member comprises a guide groove which is disposed on a side wall of the chamber. The movable shaft is provided with a guide post which is movably disposed in the guide groove.

In some embodiments, another end of the light source plate can comprise a snap-fit member, wherein the fixed top cover correspondingly can comprise a snap-fit seat at its other end. The light source plate can be fixed to the fixed top cover through engagement of the snap-fit member and the snap-fit seat, and the light source plate can comprise a first groove with slide seats on two sides thereof. The snap-fit member can comprise slide grooves on two sides thereof, and the snap-fit member can then be slidingly engaged with the first groove of the light source plate through the engagement of the slide grooves and the slide seats. Furthermore, the snap-fit seat can be provided with a fastening groove, and correspondingly the outer side of the snap-fit member can be provided with a ratchet. The ratchet can be configured to be snap-fitted into the fastening groove.

The light source plate can advantageously be provided with at least one heat dissipating hole. Such heat dissipating holes in the light source plate will contribute in conveying heat away from the heat generating light source, such as LEDs (light emitting diodes).

In a further aspect of the present disclosure, there is arranged a ceiling light comprising a fixed top cover, a light source plate and a wire buckle structure. The light source plate is detachably mounted at a lower end of the fixed top cover, and the wire buckle structure is mounted at a lower end of the fixed top cover. According to an embodiment, the wire buckle structure comprises a wire buckle base and a buckle. One end of the buckle is pivotally connected to the wire buckle base, while the other end of the buckle is movably snap-fitted with the wire buckle base. A fastening space, configured for receiving an electric wire, is formed between the buckle and the wire buckle base.

In some embodiments, a clamping wall can be disposed at an end of the buckle that is movably snap-fitted with the wire buckle base. The clamping wall can then be provided with a slot, the wire buckle base can be provided with a pressing plate, wherein the clamping wall and the pressing plate can connect through interference fit.

Advantageously, at least one ratchet can be arranged on a side of the clamping wall that faces the pressing plate. Correspondingly, a capture strip can be arranged on a side of the pressing plate which faces the clamping wall.

In some embodiments of this aspect of the disclosure, the buckle can be provided with a wire-pressing rib. Also, the wire buckle base can be provided with a placement groove, and the fastening space is formed between the wire-pressing rib and the placement groove. Racks can be disposed on the sides of the wire-pressing rib and of the placement groove that are close to the fastening space. The rack on the wire-pressing rib can be closely engaged with the rack on the placement groove. The placement groove can be provided with a separating post that extends toward the fastening space and thus divides the fastening space into a first space and a second space.

In some embodiments, the wire buckle base may be provided with a buckle pivot shaft, while the buckle can be provided with a pivot sleeve. The pivot sleeve can then be mounted on the buckle pivot shaft. In such embodiments the pivot sleeve may be provided with an opening, wherein the spacing of the opening is less than the outer diameter of the buckle pivot shaft.

Furthermore, the light source plate may in some embodiments comprise a buckle-receiving aperture, into which the buckle is configured to extend when the light source plate is in its installed, operating position.

In further embodiments, a pivot shaft may be arranged at one end of the light source plate, and correspondingly a pivot seat can then be disposed at one end of the fixed top cover. The light source plate can then be pivotally connected to the fixed top cover by engagement between the pivot shaft and the pivot seat.

The pivot seat may then, i.e. in such embodiments, be provided with a sinking platform and pivot holes, wherein the pivot holes are disposed on both sides of the sinking platform. The light source plate can then be provided with a pivot shaft mounting member that is mounted on the sinking platform, the pivot shaft being mounted at both ends of the pivot shaft mounting member and configured to be inserted into the pivot holes. The pivot shaft at at least one end of the pivot shaft mounting member is advantageously movably mounted on the pivot shaft mounting member.

In such embodiments, the pivot shaft movably mounted on the pivot shaft mounting member can be a movable shaft and the pivot shaft mounting member can be provided with a chamber. The movable shaft can then be movably inserted into the chamber. Moreover, the pivot shaft mounting member can further be provided with a guide groove arranged on a side wall of the chamber, while the movable shaft can be provided with a guide post movably disposed in the guide groove.

According to a third aspect of the disclosure, there is also provided a ceiling light comprising a fixed top cover, an LED carrier plate comprising a plurality of LEDs (light emitting diodes), an LED driver configured to power the LEDs, and a light source plate to which the LED carrier plate is attached. The LED carrier plate is a metal plate with a front face and a back face, having the plurality of LEDs distributed on its front face. According to this aspect of the disclosure, the light source plate is made of a plastic material, and the back face comprises an exposed back face portion that constitutes at least 30 % of the area of the back face, as the light source plate covers less than 70 % of the back face.

The front face of the LED carrier plate is the face that faces in the same direction as the light from the LEDs. Thus, the back face faces against the fixed top cover when in a normal operational mode.

Having a large exposed back face portion contributes in cooling the LED carrier plate and thus the LEDs. In some embodiments, the exposed back face portion ca be at least 50 %, or at least 70 % of the back face area.

In an embodiment according to this aspect of the disclosure, the LED carrier plate may comprise a driver aperture, wherein the LED driver extends through the driver aperture.

Advantageously, the LED driver can comprise a sensor switch unit configured to detect movement, and the driver aperture can be located centrally in the LED carrier plate.

By arranging the sensor switch unit in the central aperture of the LED carrier plate, one obtains at least two advantageous effects. First, one can provide an LED lamp portion with a small extension in the direction of the facing direction of the LED carrier plate, despite the extension of the sensor switch unit. Secondly, one is able to locate the sensor switch unit in a position that is advantageous for detection of movement. Such movement may govern the output of the LED driver, and hence the LEDs.

### Example embodiment of the invention

While the present invention has been described in general terms above, some non-limiting example embodiments will be presented below with reference to the drawings, in which
- Fig. 1: is a schematic view showing a closed state of a light source plate according to a preferred embodiment of the invention;
- Fig. 2: is a schematic view showing an open state of a light source plate according to a preferred embodiment of the invention;
- Fig. 3: is a schematic structural view showing a pivot shaft according to a preferred embodiment of the invention;
- Fig. 4: is a schematic structural view showing a snap-fit member according to a preferred embodiment of the invention;
- Fig. 5: is a schematic structural view showing a fixed top cover according to a preferred embodiment of the invention;
- Fig. 6: is a schematic structural view showing a light source plate according to a preferred embodiment of the invention;

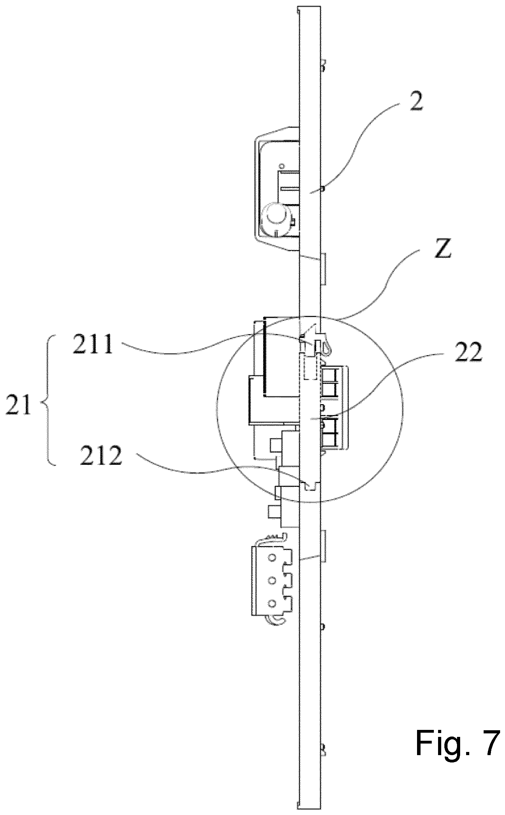

- Fig. 7: is a cross-sectional view of a light source plate according to a preferred embodiment of the invention;

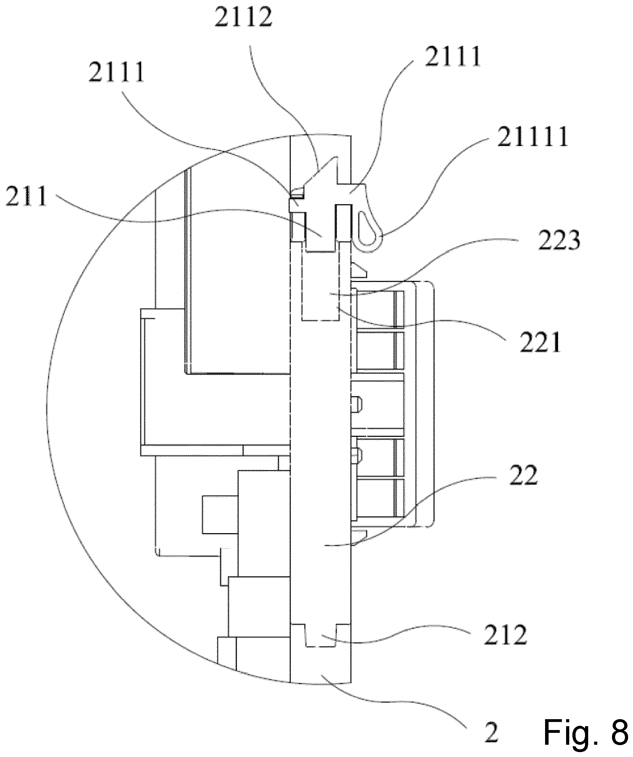

- Fig. 8: is a partially enlarged view of Z in Fig. 7;

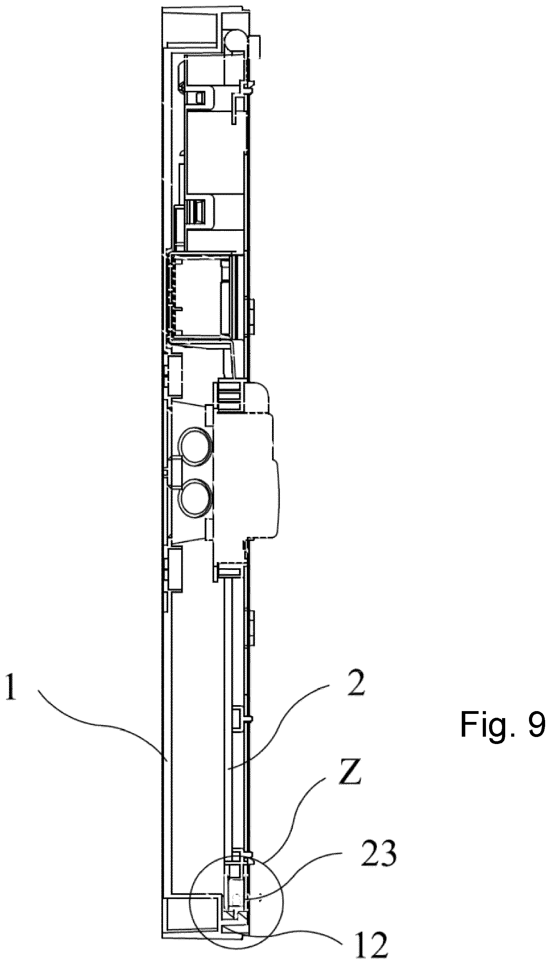

- Fig. 9: is a cross-sectional view of a fixed top cover and a light source plate according to a preferred embodiment of the invention;

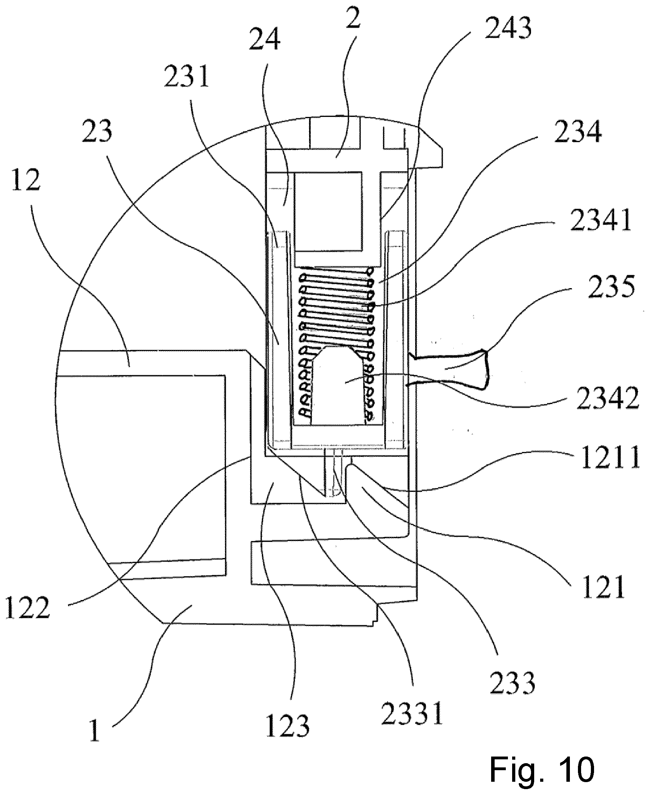

- Fig. 10: is a partially enlarged view of Z in Fig. 9;
- Fig. 11: is a perspective view of a fixed top cover and a light source plate having a wire buckle structure for fixation of electric wires, wherein the buckle structure is in an open position;
- Fig. 12: is a cut-out corresponding to the view of Fig. 11, showing the buckle structure in a closed position;
- Fig. 13: is a perspective view showing the light source plate in an open state;
- Fig. 14: is a perspective view showing the fixed top cover without the light source plate;
- Fig. 15: is an enlarged perspective view of the wire buckle structure; and
- Fig. 16: is a front view of the fixed top cover, the light source plate and an LED carrier plate mounted to the light source plate.

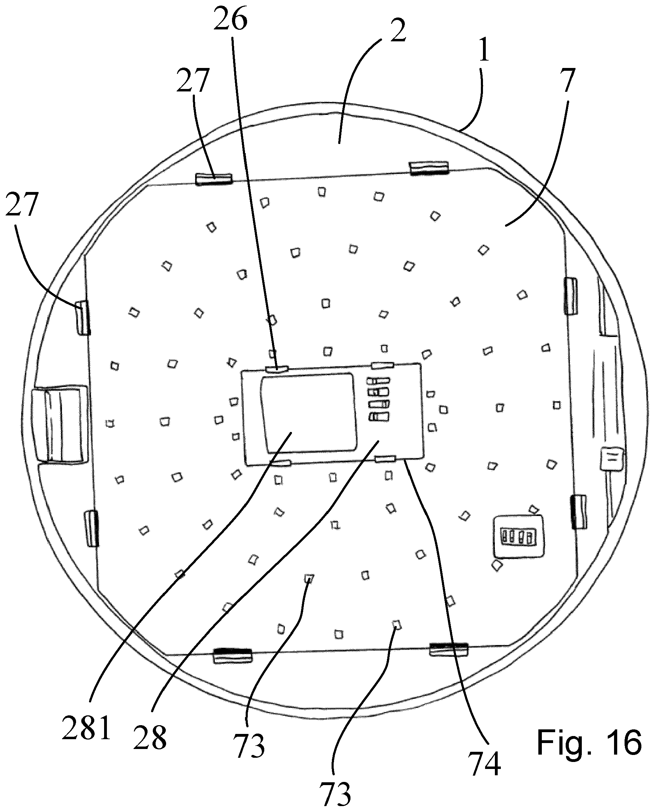

Fig. 16 depicts a front view showing an LED carrier plate mounted to a light source plate.

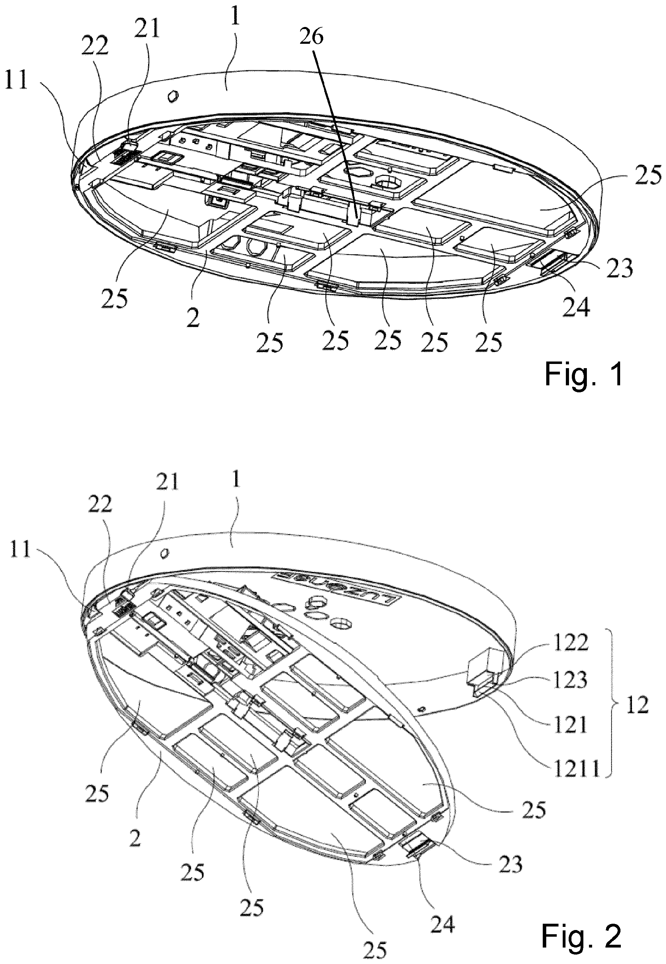

As shown in Fig. 1 to Fig. 6, a light source plate structure of a ceiling light according to a preferred embodiment of the invention is provided, which includes a fixed top cover 1 and a light source plate 2, and the light source plate 2 is detachably mounted at a lower end of the fixed top cover 1. A pivot shaft 21 is disposed at one end of the light source plate 2, and a snap-fit member 23 is disposed at the other end of the light source plate 2; correspondingly, a pivot seat 11 is disposed at one end of the fixed top cover 1, and a snap-fit seat 12 is disposed at the other end of the fixed top cover 1. The light source plate 2 is mounted in the pivot seat 11 and pivotally connected to the fixed top cover 1 via the pivot shaft 21 so that the light source plate 2 can rotate around the fixed top cover 1. Moreover, the light source plate 2 is fixed to the fixed top cover 1 through the cooperation of the snap-fit member 23 and the snap-fit seat 12.

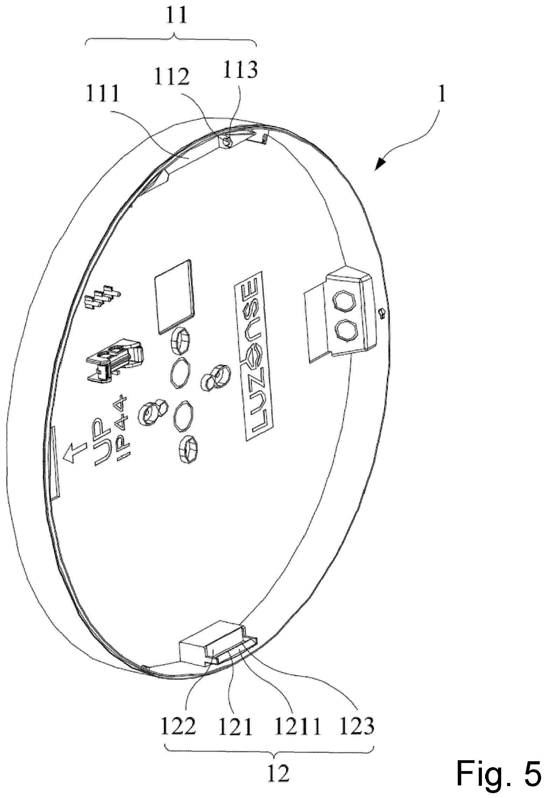

The pivot seat 11 is provided with a sinking platform 111 and pivot holes 112, as shown in Fig. 5. The pivot holes 112 are disposed on both sides of the sinking platform 111, the light source plate 2 is provided with a pivot shaft mounting member 22, the pivot shaft mounting member 22 is mounted on the sinking platform 111, and a pivot shaft 21 is mounted at both ends of the pivot shaft mounting member 22 and inserted in the pivot holes 112. The pivot shaft 21 is movably mounted at one end of the pivot shaft mounting member 22, and the pivot shaft 21 may be movably or fixedly mounted at the other end of the pivot shaft mounting member 22. The pivot shaft 21 may be a movable shaft 211 or a fixed shaft 212 depending on the installation manner.

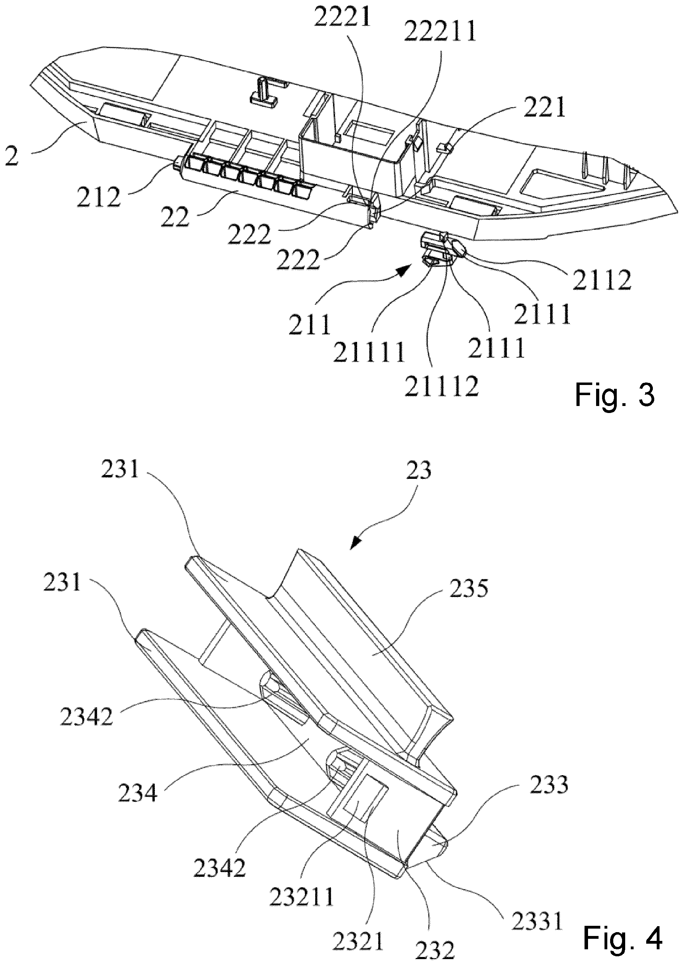

As shown Fig. 3, a fixed shaft 212 is fixedly mounted at one end of the pivot shaft mounting member 22. The fixed shaft 212 and the pivot shaft mounting member 22 are integrally formed. When mounting the light source plate 2 on the fixed top cover 1, the fixed shaft 212 at one end of the pivot shaft mounting member 22 may be inserted into the pivot hole 112 of the pivot seat 11.

A movable shaft 211 is movably mounted at the other end of the pivot shaft mounting member 22. The pivot shaft mounting member 22 is provided with a chamber 221 extending inwardly from the end face, and the movable shaft 211 is movably inserted into the chamber 221. The pivot shaft mounting member 22 is further provided with a guide groove 222 which is disposed on the side wall of the chamber 221, and the movable shaft 211 is provided with a guide post 2111. Through the cooperation of the guide groove 222 and the guide post 2111, the movable shaft 211 can move back and forth along the guide groove 222 in the chamber 221. The pivot shaft mounting member 22 is further provided with a first spring 223. The first spring 223 is inserted into the chamber 221, one end of the first spring 223 abuts against an inner end face of the chamber 221, and the other end of the first spring 223 abuts against an end face of the movable shaft 211 which faces the chamber 221. After the fixed shaft 212 is inserted into the pivot hole 112, the movable shaft 211 is pushed toward the chamber 221 using the guide post 2111, and the movable shaft 211 moves into the chamber 221 and compresses the first spring 223. At the same time, the first spring 223 is compressed and potential energy is accumulated until the outer end face of the movable shaft 211 is flush with the outer end face of the chamber 221. Then, the pivot shaft mounting member 22 is pressed into the sinking platform 111 of the pivot seat 11, the movable shaft 211 is placed at the opening of the pivot hole 112, and the thrust on the guide post 2111 is released. The first spring 223 may push the movable shaft 211 into the pivot hole 112 under the elastic force of the first spring 223, thereby pivotally connecting the light source plate 2 onto the fixed top cover 1. When the light source plate 2 needs to be removed from the fixed top cover 1, it is only required to push the movable shaft 211 toward the chamber 221 using the guide post 2111 so that the movable shaft 211 moves into the chamber 221 and leaves the pivot hole 112, and then the light source plate 2 may be removed from the fixed top cover 1.

In order to conveniently control the movement of the movable shaft 211 in the chamber 221 via the guide post 2111, the guide post 2111 is provided with an operation handle 21111 which is fixed at the lower end of the guide post 2111. When it is required to control the movement of the movable shaft 211 via the guide post 2111, the operation handle 21111 provides the operator with an easy-to-operate operating member, and therefore no auxiliary tool is required for the operator during operation.

A first inclined surface 2112 is disposed at one end of the movable shaft 211 which faces the pivot hole 112, and correspondingly the pivot seat 11 is provided with a second inclined surface 113. The second inclined surface 113 is disposed below the outer end of the pivot hole 112. When mounting the movable shaft 211 in the pivot hole 112, it is only required to align the movable shaft 211 with the pivot hole 112, and the pivot shaft mounting member 22 is pressed into the sinking platform 111 of the pivot seat 11. With the pivot shaft mounting member 22 being pressed into the sinking platform 111 of the pivot seat 11, the second inclined surface 113 of the pivot seat 11 can push the movable shaft 211 toward the chamber 221 via the first inclined surface 2112 of the movable shaft 211, the movable shaft 211 is pushed and moved into the chamber 221 and presses the elastic member, and the elastic member is pressed and potential energy is accumulated. Meanwhile, the movement of the movable shaft 211 into the chamber 221 enables the pivot shaft mounting member 22 to be smoothly pressed into the sinking platform 111 of the pivot seat 11. When the movable shaft 211 reaches the pivot hole 112 with the pivot shaft mounting member 22 being pressed into the sinking platform 111 of the pivot seat 11, the movable shaft 211 loses the blocking action of the pivot seat 11, and the elastic member can push the movable shaft 211 into the pivot hole 112 under the elastic force of the elastic member. With the arrangement of the first inclined surface 2112 and the second inclined surface 113 which cooperate with each other, the operation of mounting the light source plate 2 on the fixed top cover 1 is simplified, and therefore there is an advantage of easy and convenient operation in mounting the light source plate 2.

The guide groove 222 is provided with baffles 2221. The baffles 2221 are fixedly disposed on the inner side wall of the guide groove 222. When inserting the movable shaft 211 into the chamber 221, the guide post 2111 is forcedly pushed into the guide groove 222 from the opening between the baffles 2221. The pivot shaft mounting member 22 on both sides of the guide groove 222 may be deformed and expanded toward both sides of the guide groove 222 after being pressed by the guide post 2111, and thus the guide post 2111 can smoothly enter the guide groove 222. Then, the pivot shaft mounting member 22 on both sides of the guide groove 222 may be restored to the original shape after losing the pressing of the guide post 2111. At the same time, the baffles 2211 can block the guide post 2111 in the guide groove 222, preventing the movable shaft 211 from being detached from the guide groove 222 during the back and forth movement of the movable shaft 211 along the guide groove 222.

A gradual opening 22211 that gradually expands from the inside to the outside of the guide groove 222 is disposed between the baffles 2221, and correspondingly a first inclined guide surface 21112 that gradually tapers from the outside to the inside of the guide groove 222 is disposed on the guide post 2111. When inserting the movable shaft 211 into the chamber 221, since the spacing of the gradual opening 22211 between the baffles 2221 toward the outer side of the guide groove 222 is large, and the spacing of the first inclined guide surface 21112 toward the inner side of the guide groove 222 is small, the guide post 2111 may be conveniently and quickly inserted into the gradual opening 22211 between the baffles 2221. Moreover, the guide post 2111 can smoothly expand the pivot shaft mounting member 22 toward two sides of the gradual opening 22211 based on the interaction between the slopes on both sides of the gradual opening 22211 and the slopes on both sides of the first inclined guide surface 21112, and meanwhile the movable shaft 211 may also be smoothly inserted into the chamber 221.

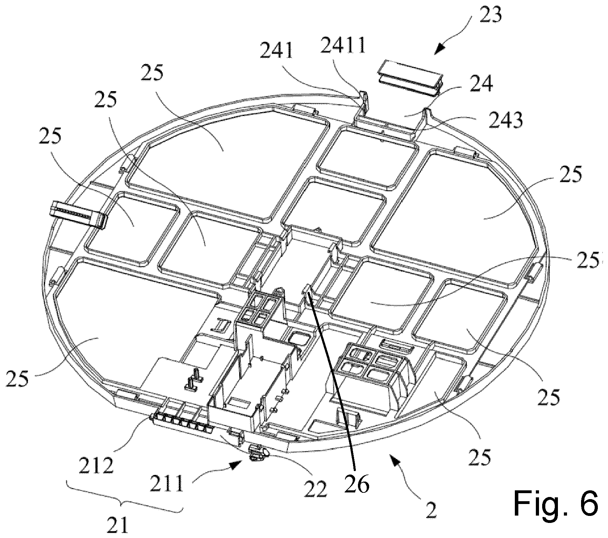

The light source plate 2 is provided with a first groove 24 (Fig. 6) which is provided with slide seats 241 on two sides thereof, the snap-fit member 23 is provided with slide grooves 232 on two sides thereof (Fig. 4), and the snap-fit member 23 is slidingly connected into the first groove 24 of the light source plate 2 through the cooperation of the slide grooves 232 and the slide seats 241. The snap-fit member 23 can slide back and forth in the first groove 24 along the slide grooves 232.

The above snap-fit seat 12 is provided with a capture strip 121 and a positioning face 122 (Fig. 2, Fig. 5). A fastening groove 123 is disposed between an upper end face of the capture strip 121 and the positioning face 122. Correspondingly, an outer side of the snap-fit member 23 is provided with a ratchet 233 (Fig. 4). The ratchet 233 is captured in the fastening groove 123. When it is required to fix the light source plate 2 on the fixed top cover 1, firstly, the snap-fit member 23 slides toward the interior of the first groove 24, and then the light source plate 2 is rotated around the pivot shaft 21 toward the snap-fit seat 12 until the upper end face of the snap-fit member 23 abuts against the positioning face 122. Then, the snap-fit member 23 slides toward the outside of the first groove 24 so that the ratchet 233 on the snap-fit member 23 slides into the fastening groove 123 and is fixed by the capture strip 121 and the positioning face 122. When it is required to open the light source plate 2 from the fixed top cover 1, firstly, the snap-fit member 23 slides toward the interior of the first groove 24 so that the ratchet 233 on the snap-fit member 23 leaves the fastening groove 123 and is free from the fixing action of the capture strip 121 and the positioning face 122. Then, the light source plate 2 can be rotated downwardly around the pivot shaft 21 so that the operation of opening the light source plate 2 from the fixed top cover 1 is completed.

The slide groove 232 of the above snap-fit member 23 is provided with a stop block 2321 which is provided with a second inclined guide surface 23211 on a side thereof facing the slide seat 241. Correspondingly, the slide seat 241 is provided with a third inclined guide surface 2411 on a side thereof facing the stop block 2321. When it is required to assemble the snap-fit member 23 into the first groove 24, the snap-fit member 23 is inserted into the first groove 24 through the cooperation and alignment of the slide grooves 232 and the slide blocks. During the insertion, the second inclined guide surface 23211 on the stop block 2321 will closely abut against the third inclined guide surface 2411 of the slide seat 241. At this time, the snap-fit member 23 is pushed by force so that the stop block 2321 will forcedly enter the first groove 24 via the slide seat 241. Meanwhile, the snap-fit member 23 will also be smoothly assembled into the first groove 24. With the arrangement of the stop block 2321, when the snap-fit member 23 slides toward the outside of the first groove 24, the end face on the inner side of the slide seat 241 will block the end face on the outer side of the stop block 2321, thereby preventing the snap-fit member 23 from being detached from the first groove 24.

The above snap-fit member 23 is internally provided with a second groove 234 which is provided with at least one second spring 2341 therein. One end of the second spring 2341 abuts against an inner end face of the second groove 234, and the other end of the second spring 2341 abuts against an inner end face of the first groove 24. When assembling the snap-fit member 23 in the first groove 24, under the action of the elastic force of the second spring 2341, the snap-fit member 23 is pressed against the outer side of the first groove 24 by the second spring 2341, and the end face on the outer side of the stop block 2321 on the snap-fit member 23 is pressed against the end face on the inner side of the slide seat 241, so that the second spring 2341 presses and fixes the snap-fit member 23 in the first groove 24. When it is required to fix the light source plate 2 in the fixed top cover 1, firstly, the snap-fit member 23 slides toward the inside of the first groove 24; at the same time, the snap-fit member 23 compresses the second spring 2341 inward so that potential energy is accumulated, and then the light source plate 2 is rotated around the pivot shaft 21 toward the snap-fit seat 12 until the upper end face of the snap-fit member 23 abuts against the positioning face 122 of the snap-fit seat 12. At this point, the snap-fit member 23 is released, and under the action of the elastic force of the second spring 2341, the second spring 2341 can push the snap-fit member 23 toward the outer side of the first groove 24 so that the ratchet 233 on the snap-fit member 23 slides into the fastening groove and is fixed by the capture strip 121 and the positioning face 122. When it is required to open the light source plate 2 from the fixed top cover 1, firstly, the snap-fit member 23 slides toward the inside of the first groove 24 against the elastic force of the second spring 2341 so that the ratchet 233 on the snap-fit member 23 leaves the fastening groove 123, and is free from the fixing action of the capture strip 121 and the positioning face 122. Then, the light source plate 2 can be rotated downwardly around the pivot shaft 21 so that the operation of opening the light source plate 2 from the fixed top cover 1 is completed. After the light source plate 2 is opened, the snap-fit member 23 is released, and under the action of the elastic force of the second spring 2341, the second spring 2341 can push the snap-fit member 23 toward the outside of the first groove 24. Under the action of the elastic force of the second spring 2341, the snap-fit member 23 is pressed against the outer side of the first groove 24 by the second spring 2341, and the end face on the outer side of the stop block 2321 on the snap-fit member 23 is pressed against the end face on the inner side of the slide seat 241, so that the second spring 2341 presses and fixes the snap-fit member 23 in the first groove 24.

In the present embodiment, the second groove 234 is provided therein with two second springs 2341 which are disposed symmetrically with respect to a central axis of the second groove 234 so that when the snap-fit member 23 slides in the slide groove 232, the two second springs 2341 serve to stably and firmly support the snap-fit member 23, thereby preventing the snap-fit member 23 from wobbling in the slide groove 232, which is adverse for a normal use.

The ratchet 233 is provided with a first inclined surface 2331, and correspondingly the capture strip 121 is provided with a second inclined surface 1211. With the arrangement of the first inclined surface 2331 and the second inclined surface 1211 that cooperate with each other, when it is required to fix the light source plate 2 on the fixed top cover 1, the light source plate 2 is rotated around the pivot shaft 21 toward the snap-fit seat 12, and when the ratchet 233 abuts against the capture strip 121 due to the rotation, the second inclined surface 1211 of the capture strip 121 can push the ratchet 233 toward the interior of the first groove 24 using the first inclined surface 2331 of the ratchet 233. At the same time, the snap-fit member 23 moves toward the interior of the first groove 24 and compresses the second spring 2341 so that potential energy is accumulated in the second spring 2341 until the upper end face of the snap-fit member 23 abuts against the positioning face 122 of the snap-fit seat 12. At this point, the snap-fit member 23 will lost the blocking action of the capture strip 121, and under the action of the elastic force of the second spring 2341, the snap-fit member 23 is pressed toward the outer side of the first groove 24 by the second spring 2341. Meanwhile, the ratchet 233 is pushed into the fastening groove 123, and due to the fixing action of the capture strip 121 and the positioning face 122, the light source plate 2 is fixed to the fixed top cover 1. Owing to the cooperation of the first inclined surface 2331 and the second inclined surface 1211, the light source plate 2 can be fixed to the fixed top cover 1 by merely rotating the light source plate 2, thereby simplifying the fixing operation on the light source plate 2.

Limiting posts 2342, 242 are disposed in the second groove 234 of the above snap-fit member 23 and/or the first groove 24 of the light source plate 2. The above second springs 2341 are sleeved over the limiting posts 2342, 242. With the arrangement of the limiting posts 2342, 242, during the deformation of the second springs 2341 due to contracting or expanding, the limiting posts 2342, 242 can limit the positions of the second springs 2341, thereby preventing two ends of the second springs 2341 from moving at the abutting faces thereof and affecting a normal use. As shown, in the present embodiment, the limiting post 2342 is disposed in the second groove 234 of the snap-fit member 23.

To conveniently control the sliding of the snap-fit member 23 in the first groove 24, the snap-fit member 23 is provided with an operation handle 235 which is fixed at the lower end of the snap-fit member 23, Fig. 4. When it is required to control the sliding of the snap-fit member 23 in the first groove 24, the operation handle 235 provides the operator with an easy-to-operate operating member, and therefore no auxiliary tool is required for the operator during operation.

The above snap-fit member 23 is further provided with guide plates 231 which are located at upper and lower ends of the second groove 234. The above first groove 24 is provided therein with guide ribs 243, onto which the guide plates 231 are slidingly connected. Firstly, with the arrangement of the guide plates 231 and the guide ribs 243, the second springs 2341 disposed in the first groove 24 can be closed in the guide plates 231 and the guide ribs 243, thereby preventing the aesthetic beauty of the light source plate 2 from being impaired due to exposure of the second springs 2341; secondly, the guide plates 231 can have a limiting effect on the second springs 2341, and during the deformation of the second springs 2341 due to contracting or expanding, the guide plates 231 can limit the positions of the second springs 2341, thereby preventing the second springs 2341 from moving and affecting a normal use. Thirdly, when the snap-fit member 23 slides in the first groove 24, the guide plates 231 can slide on the guide ribs 243 smoothly so that the snap-fit member 23 slides in the first groove 24 more smoothly, thereby preventing the snap-fit member 23 from wobbling in the first groove 24, which is adverse for a normal use.

The light source plate 2 is provided with at least one heat dissipating hole 25. In the present embodiment the light source plate 2 is provided with eleven heat dissipating holes 25. During use, heat will be generated from the light source fixedly mounted at the lower end of the light source plate 2. The heat will be accumulated inside the ceiling light and could damage the light source and other assemblies, thereby shortening the service life of the light source and other assemblies. With the arrangement of the heat dissipating holes 25, the heat generated from the light source can pass through the heat dissipating holes 25 and can be transferred to the ceiling via the fixed top cover 1. Meanwhile, the ceiling has a relatively low temperature, which is advantageous for absorbing heat of the fixed top cover 1 fixed at the lower end of the ceiling.

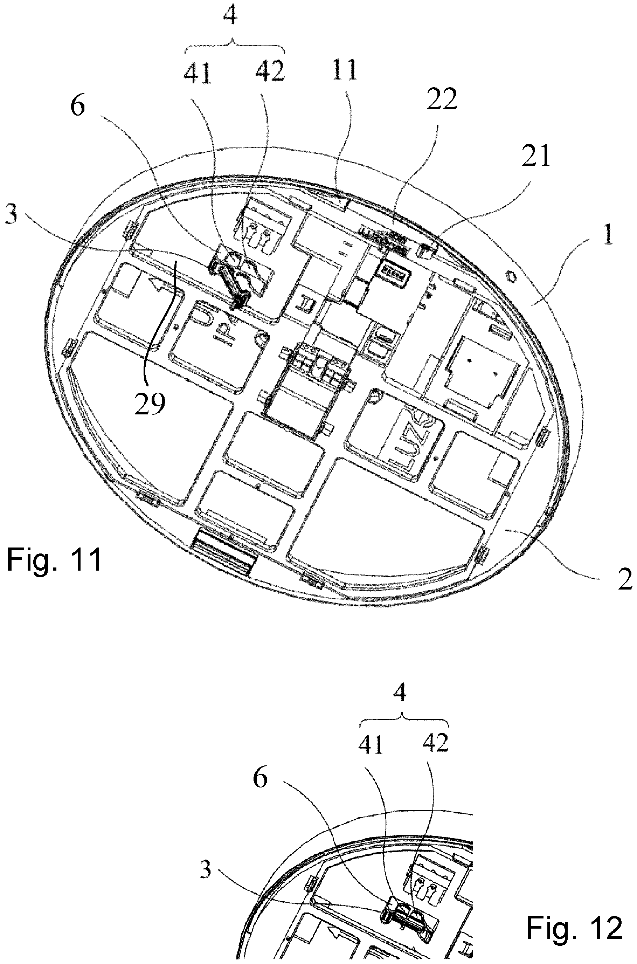

The ceiling light may advantageously include a wire buckle base 6 and a buckle 3, as shown in Fig. 11 to Fig. 15. In Fig. 11, the buckle 3 is shown in an open position, while Fig. 12 depicts the buckle 3 in a closed position. The wire buckle base 6 is fixed at the bottom of the fixed top cover 1. One end of the buckle 3 is pivotally connected to the wire buckle base 6, the other end of the buckle 3 is movably snap-fitted with the wire buckle base 6, and a fastening space 4, for receiving an electric wire, is formed between the buckle 3 and the wire buckle base 6. There are many ways of fixing the wire buckle base 6 and the fixed top cover 1. For example, as shown in the figures, the wire buckle base 6 and the fixed top cover 1 may be integrally formed, with the wire buckle base 6 being fixed at the bottom of the fixed top cover 1. The wire buckle base 6 may also be glued or locked at the bottom of the fixed top cover 1 by adhesive or screws. Alternatively, the wire buckle base 6 may be snap-fitted with the fixed top cover 1 through structure arrangement.

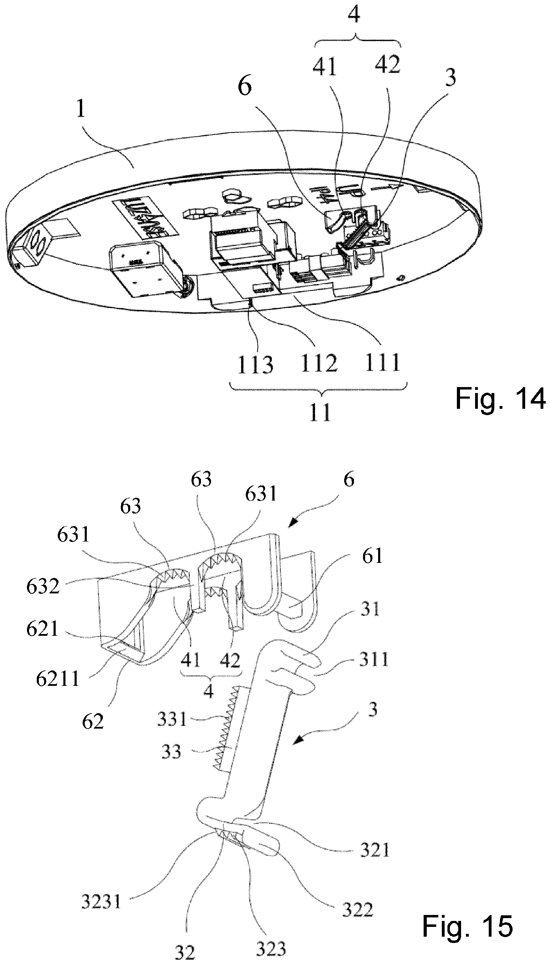

Referring to Fig. 15, the wire buckle base 6 is provided with a buckle pivot shaft 61. The buckle 3 is provided with a pivot sleeve 31, and the pivot sleeve 31 is sleeved over the buckle pivot shaft 61 so that the buckle 3 may be rotated around the buckle pivot shaft 61 on the wire buckle base 6. The pivot sleeve 31 is provided with an opening 311. The spacing of the opening 311 is less than the outer diameter of the buckle pivot shaft 61. When mounting the buckle 3 on the wire buckle base 6, the opening 311 in the pivot sleeve 31 firstly abuts against the buckle pivot shaft 61, and a pressure is applied to the pivot sleeve 31 toward the buckle pivot shaft 61. In this case, the buckle pivot shaft 61 can expand the pivot sleeve 31 toward the two sides of the opening 311 so that the buckle pivot shaft 61 can enter the pivot sleeve 31 successfully, and then the sides of the opening 311 of the pivot sleeve 31 are restored to the original shape due to cancellation of the expanding force from the buckle pivot shaft 61, thereby preventing the buckle 3 from being detached from the wire buckle base 6.

A clamping wall 32 is disposed at an end of the buckle 3 that is movably snap-fitted with the wire buckle base 6. The clamping wall 32 is provided with a slot 321, the wire buckle base 6 is provided with a pressing plate 62, and the clamping wall 32 and the pressing plate 62 are connected through interference fit. When the buckle 3 needs to be fixed to the wire buckle base 6, the buckle 3 is rotated around the buckle pivot shaft 61 toward the inner side of the wire buckle base 6, the clamping wall 32 may be bent toward the slot 321 due to the pressing of the pressing plate 62 so that the buckle 3 can enter the wire buckle base 6 successfully, and the buckle 3 can be fixed to the wire buckle base 6 due to the cooperation of the pressing plate 62 and the buckle pivot shaft 61. When the buckle 3 needs to be released from the wire buckle base 6, the clamping wall 32 is pressed toward the slot 321 so that the clamping wall 32 is disengaged from the interference fit with the pressing plate 62, then the buckle 3 is rotated around the buckle pivot shaft 61 toward the outer side of the wire buckle base 6, and the buckle 3 is released from the wire buckle base 6.

In order to facilitate the operation of fixing the buckle 3 to the wire buckle base 6 or releasing the buckle 3 from the wire buckle base 6, the clamping wall 32 is provided with a flange 322, and the flange 322 is fixed at the bottom of the clamping wall 32. With the flange 322, the installer can conveniently operate the clamping wall 32.

At least one ratchet 323 is disposed on a side of the clamping wall 32 which faces the pressing plate, and correspondingly a capture strip 621 is disposed on a side of the pressing plate 62 which faces the clamping wall. The buckle 3 may be further fixed to the wire buckle base 6 through the arrangement of the ratchet 323 and the capture strip 621 mating with each other, thereby avoiding the phenomenon that the interference fit connection between the clamping wall 32 and the pressing plate 62 is not secure due to wear during long-term use. When the buckle 3 needs to be fixed to the wire buckle base 6, the buckle 3 is rotated around the buckle pivot shaft 61 toward the inner side of the wire buckle base 6, and the clamping wall 32 is pressed toward the slot 321 so that the ratchet 323 on the buckle 3 can avoid the capture strip 621 on the pressing plate 62 and successfully enter the wire buckle base 6. Then, the clamping wall 32 is loosened, and it can be restored to the original shape toward the pressing plate 62 and abut against the inner wall of the pressing plate 62. The buckle 3 can be fixed to the wire buckle base 6 through the buckle pivot shaft 61 and the pressing plate 62. Meanwhile, the ratchet 323 may be captured by the capture strip 621, and the buckle 3 is further fixed to the wire buckle base 6.

In this embodiment, three ratchets 323 are disposed on the outer side of the clamping wall 32, and the fastening spaces 4 formed by the cooperation between the three ratchets 323 and the capture strip 621 gradually decrease in a direction of the ratchets 323 from top to bottom. The power cords are usually fixed in the fastening spaces 4 in a form of bundles after being tidied up during the use, and the fastening spaces 4 required for the bundles of power cords are different in size. The sizes of the fastening spaces 4 may be adjusted by disposing three ratchets 323 on the outer side of the clamping wall 32. When the fastening space 4 required for the bundles of power cords is small, the bundles of power cords may be fastened between the buckle 3 and the wire buckle base 6 by matching the ratchet 323 at the upper end with the capture strip 621. When the fastening space 4 required for the bundles of power cords is large, the ratchet 323 at the lower end is correspondingly selected to be matched with the capture strip 621.

The ratchet 323 is provided with a first inclined surface 3231, and correspondingly a second inclined surface 6211 is disposed on the capture strip 621. With the arrangement of the first inclined surface 3231 and the second inclined surface 6211 that are matched with each other, when the buckle 3 needs to be fixed to the wire buckle base 6, the buckle 3 is rotated around the buckle pivot shaft 61 toward the inner side of the wire buckle base 6, and the ratchets 323 may pass along the second inclined surface 6211 on the capture strip 621 with the first inclined surface 3231 at the upper end and slide onto the upper end of the capture strip 621, thereby achieving a snap-fit between the ratchets 323 and the capture strip 621. As such, the ratchets 323 on the buckle 3 may avoid the capture strip 621 on the pressing plate 62 and successfully enter the wire buckle base 6 with no need to press the clamping wall 32 toward the slot 321.

A wire-pressing rib 33 are disposed on a side of the buckle 3 which is close to the fastening space 4. With the arrangement of the wire-pressing rib 33, when the power cords are fastened in the fastening space 4 by matching the buckle 3 with the wire buckle base 6, the power cords may be fixed in a placement groove 63 by being pressed by the wire-pressing rib 33 so that the power cords are prevented from being loosened and messy in the fastening space 4.

The wire buckle base 6 is provided with a placement groove 63. The arrangement of the placement groove 63 facilitates the installer to place the power cords in the placement groove 63 so that the power cords are prevented from being loosened and messy in the fastening space 4. Further, the above-mentioned placement groove 63 has an arc-shaped structure which is concave toward the fixed top cover 1. By designing the placement groove 63 to be of an arc-shaped structure, firstly, the fastening space 4 for accommodating the power cords is increased; secondly, it is further convenient for the installer to place the power cords in the placement groove 63 with the arc-shaped structure, thereby preventing the power cords from being loosened and messy in the fastening space 4.

Racks 331 and 631 are respectively disposed on sides of the wire-pressing rib 33 and the placement groove 63 that are close to the fastening space 4, and the rack 331 on the wire-pressing rib 33 closely engages with the rack 631 on the placement groove 63. With the arrangement of the racks 331 and 631, when the power cords are fastened in the fastening space 4 by matching the buckle 3 with the wire buckle base 6, the rack 331 on the wire-pressing rib 33 and the rack 631 on the placement groove 63 may be close to each other, and the power cords are therefore closely fastened in the fastening space 4 by the racks, thereby preventing the power cords from being loosened and messy in the fastening space 4.

A separating post 632 extending toward the fastening space 4 is disposed in the placement groove 63, and the fastening space 4 is separated by the separating post 632 into a first space 41 and a second space 42. With the arrangement of the separating post 632 which separates the fastening space 4 into the first space 41 and the second space 42, when tidying up the power cords, the neutral wire and the live wire may be tidied up separately. For example, the neutral wire is tidied up and stored in the first space 41, and the live wire is tidied up and stored in the second space 42, avoiding the occurrence of short-circuit due to the neutral wire and the live wire being in contact with each other in the fastening space 4.

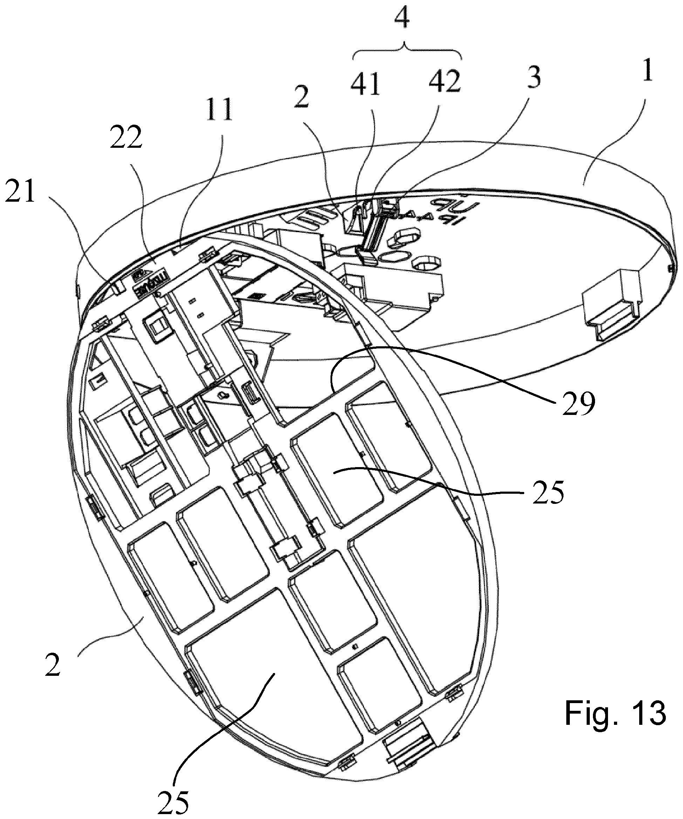

Referring to Fig. 11 and Fig. 13, the light source plate 2 comprises a buckle receiving aperture 29, which is configured to receive the buckle 3 when the light source plate 2 is in its closed state. In other words, in the closed state, the buckle 3 extends into the buckle receiving aperture 29. In the disclosed embodiment, the buckle receiving aperture 29 functions also as a heat dissipating hole 25.

Reference is made to Fig. 16, which illustrates ceiling light with the fixed top cover 1, the light source plate 2, and a light source 7 installed on the light source plate 2. In this embodiment, the light source is in the form an LED carrier plate 7. The LED carrier plate 7 is a metal plate on which there is distributed a plurality of LEDs

For attachment of the LED carrier plate 7 on the light source plate 2, the latter comprises a plurality of carrier plate attachment means 27.

The LED carrier plate 7 comprises a driver aperture 74, through which an LED driver 28 extends. The LED driver 28 is fixed to the light source plate 2 by means of LED driver connections 26 (which are also shown in Fig. 6) on the light source plate.

Heat that is generated by the LEDs 73 is distributed in the LED carrier plate 7, and is conveyed away through the heat dissipating holes 25 in the light source plate 2 (see e.g. Fig. 1).

As illustrated in Fig. 16, the LED driver 28 comprises a sensor switch unit 281. The sensor switch unit is configured to detect movement, typically movement of a person in a space / room where the ceiling light is mounted. In such embodiments, the control of the LEDs 73 can be operated by the sensor switch unit 281.

As the skilled reader will appreciate, a non-shown light-transmitting cover may be arranged to cover the LED carrier plate 7, as is common in the art.

## Claims

1. A light source plate structure of a ceiling light, comprising a fixed top cover (1) and a light source plate (2), the light source plate (2) being detachably mounted at a lower end of the fixed top cover (1), the light source plate structure comprises a pivot shaft (21) disposed at one end of the light source plate (2) and a pivot seat (11) arranged at one end of the fixed top cover (1), wherein the light source plate (2) is configured to be pivotally connected to the fixed top cover (1) when the pivot shaft (21) is mounted to the pivot seat (11), wherein the pivot seat (11) is provided with a sinking platform (111) and pivot holes (112), the pivot holes (112) are disposed on both sides of the sinking platform (111), wherein the light source plate (2) is provided with a pivot shaft mounting member (22) that is mounted to the sinking platform (111), wherein the pivot shaft (21) is mounted at both ends of the pivot shaft mounting member (22) and inserted in the pivot holes (112), and the pivot shaft (21) at at least one end of the pivot shaft mounting member (22) is movably mounted on the pivot shaft mounting member (22), wherein the pivot shaft (21) movably mounted on the pivot shaft mounting member (22) is a movable shaft, **characterized in that**
the pivot shaft mounting member (22) comprises a chamber (221),
the movable pivot shaft (21) is movably inserted into the chamber (221),
the pivot shaft mounting member (22) comprises a guide groove (222) which is disposed on a side wall of the chamber (221), and the movable shaft (21) is provided with a guide post (2111) which is movably disposed in the guide groove (222).

2. A light source plate structure of a ceiling light according to claim 1, wherein another end of the light source plate (2) comprises a snap-fit member (23),
the fixed top cover (1) correspondingly comprises a snap-fit seat (12) at its other end, the light source plate (2) is fixed to the fixed top cover (1) through engagement of the snap-fit member (23) and the snap-fit seat (12),
the light source plate (2) comprises a first groove (24) with slide seats (241) on two sides thereof,
the snap-fit member (23) comprises slide grooves (232) on two sides thereof, and the snap-fit member is slidingly engaged with the first groove (24) of the light source plate (2) through the engagement of the slide grooves (232) and the slide seats (241),
wherein the snap-fit seat (12) is provided with a fastening groove (123), and correspondingly the outer side of the snap-fit member (23) is provided with a ratchet (233), and wherein the ratchet is configured to be snap-fitted into the fastening groove (123).

3. A light source plate structure of a ceiling light according to one of the preceding claims, wherein the light source plate (2) is provided with at least one heat dissipating hole (25).

## Patentansprüche

1. Lichtquellenplattenstruktur einer Deckenleuchte, umfassend eine feste obere Abdeckung (1) und eine Lichtquellenplatte (2), wobei die Lichtquellenplatte (2) abnehmbar an einem unteren Ende der festen oberen Abdeckung (1) angebracht ist, wobei die Lichtquellenplattenstruktur eine Schwenkwelle (21), die an einem Ende der Lichtquellenplatte (2) angeordnet ist, und einen Schwenksitz (11) umfasst, der an einem Ende der festen oberen Abdeckung (1) angeordnet ist, wobei die Lichtquellenplatte (2) so konfiguriert ist, dass sie schwenkbar mit der festen oberen Abdeckung (1) verbunden ist, wenn die Schwenkwelle (21) an dem Schwenksitz (11) angebracht ist, wobei der Schwenksitz (11) mit einer Senkplattform (111) und Schwenklöchern (112) versehen ist, wobei die Schwenklöcher (112) auf beiden Seiten der Senkplattform (111) angeordnet sind, wobei die Lichtquellenplatte (2) mit einem Schwenkwellen-Befestigungselement (22) versehen ist, das an der Senkplattform (111) befestigt ist, wobei die Schwenkwelle (21) an beiden Enden des Schwenkwellen-Befestigungselements (22) befestigt und in die Schwenklöcher (112) eingesetzt ist und die Schwenkwelle (21) an mindestens einem Ende des Schwenkwellen-Befestigungselements (22) beweglich an dem Schwenkwellen-Befestigungselement (22) befestigt ist, wobei die beweglich an dem Schwenkwellen-Befestigungselement (22) befestigte Schwenkwelle (21) eine bewegliche Welle ist,
**dadurch gekennzeichnet, dass**
das Schwenkwellen-Befestigungselement (22) eine Kammer (221) umfasst,
die bewegliche Schwenkwelle (21) beweglich in die Kammer (221) eingesetzt ist, das Schwenkwellen-Befestigungselement (22) eine Führungsnut (222) aufweist, die an einer Seitenwand der Kammer (221) angeordnet ist, und die Schwenkwelle (21) mit einem Führungspfosten (2111) versehen ist, der beweglich in der Führungsnut (222) angeordnet ist.

2. Lichtquellenplattenstruktur einer Deckenleuchte nach Anspruch 1, wobei ein anderes Ende der Lichtquellenplatte (2) ein Schnappverschlusselement (23) umfasst,
und die feste obere Abdeckung (1) entsprechend einen Schnappsitz (12) an ihrem anderen Ende umfasst,
die Lichtquellenplatte (2) an der festen oberen Abdeckung (1) durch Eingriff des Schnappverschlusselements (23) und des Schnappsitzes (12) befestigt ist,
die Lichtquellenplatte (2) eine erste Nut (24) mit Gleitsitzen (241) an zwei ihrer Seiten umfasst,
das Schnappverschlusselement (23) an zwei seiner Seiten Gleitnuten (232) aufweist, und das Schnappverschlusselement durch den Eingriff der Gleitnuten (232) und der Gleitsitze (241) gleitend mit der ersten Nut (24) der Lichtquellenplatte (2) in Eingriff ist,
wobei der Schnappsitz (12) mit einer Befestigungsnut (123) versehen ist und dementsprechend die Außenseite des Schnappelements (23) mit einer Sperrklinke (233) versehen ist, und wobei die Sperrklinke so konfiguriert ist, dass sie in die Befestigungsnut (123) einrastet.

3. Lichtquellenplattenstruktur einer Deckenleuchte nach einem der vorhergehenden Ansprüche, wobei die Lichtquellenplatte (2) mit mindestens einer wärmeableitenden Bohrung (25) versehen ist.

## Revendications

1. Structure de plaque de source de lumière d'un plafonnier, comprenant un couvercle supérieur fixe (1) et une plaque de source de lumière (2), la plaque de source de lumière (2) étant montée de manière amovible à une extrémité inférieure du couvercle supérieur fixe (1), la structure de plaque de source de lumière comprend un arbre de pivot (21) disposé à une extrémité de la plaque de source de lumière (2) et un siège de pivot (11) agencé à une extrémité du couvercle supérieur fixe (1), dans laquelle la plaque de source de lumière (2) est configurée pour être reliée de manière pivotante au couvercle supérieur fixe (1) lorsque l'arbre de pivot (21) est monté sur le siège de pivot (11), dans laquelle le siège de pivot (11) est pourvu d'une plateforme d'enfoncement (111) et de trous de pivot (112), les trous de pivot (112) sont disposés des deux côtés de la plateforme d'enfoncement (111), dans laquelle la plaque de source de lumière (2) est pourvue d'un élément de montage d'arbre de pivot (22) qui est monté sur la plateforme d'enfoncement (111), dans laquelle l'arbre de pivot (21) est monté aux deux extrémités de l'élément de montage d'arbre de pivot (22) et inséré dans les trous de pivot (112), et l'arbre de pivot (21) au niveau d'au moins une extrémité de l'élément de montage d'arbre de pivot (22) est monté de manière mobile sur l'élément de montage d'arbre de pivot (22),
dans laquelle l'arbre de pivot (21) monté de manière mobile sur l'élément de montage d'arbre de pivot (22) est un arbre mobile, **caractérisée en ce que**
l'élément de montage d'arbre de pivot (22) comprend une chambre (221),
l'arbre de pivot mobile (21) est inséré de manière mobile dans la chambre (221),
l'élément de montage d'arbre de pivot (22) comprend une rainure de guidage (222) qui est disposée sur une paroi latérale de la chambre (221), et l'arbre mobile (21) est pourvu d'un montant de guidage (2111) qui est disposé de manière mobile dans la rainure de guidage (222).

2. Structure de plaque de source de lumière d'un plafonnier selon la revendication 1, dans laquelle une autre extrémité de la plaque de source de lumière (2) comprend un élément d'encliquetage (23),
le couvercle supérieur fixe (1) comprend de manière correspondante un siège d'encliquetage (12) à son autre extrémité,
la plaque de source de lumière (2) est fixée au couvercle supérieur fixe (1) par une mise en prise de l'élément d'encliquetage (23) et du siège d'encliquetage (12),
la plaque de source de lumière (2) comprend une première rainure (24) avec des sièges de coulissement (241) sur deux côtés de celle-ci,
l'élément d'encliquetage (23) comprend des rainures de coulissement (232) sur ses deux côtés, et l'élément d'encliquetage est mis en prise de manière coulissante avec la première rainure (24) de la plaque de source de lumière (2) par la mise en prise des rainures coulissantes (232) et des sièges coulissants (241),
dans laquelle le siège d'encliquetage (12) est muni d'une rainure de fixation (123), et de manière correspondante le côté extérieur de l'élément d'encliquetage (23) est muni d'un cliquet (233), et dans laquelle le cliquet est configuré pour être encliqueté dans la rainure de fixation (123).

3. Structure de plaque de source de lumière d'un plafonnier selon l'une quelconque des revendications précédentes, dans laquelle la plaque de source de lumière (2) est pourvue d'au moins un trou de dissipation de chaleur (25).
